# EUROPEAN PATENT SPECIFICATION

(11) **EP 1 294 222 B1**
(45) Date of publication and mention of the grant of the patent: **06.10.2004**
(21) Application number: 01945824.9
(22) Date of filing: 25.06.2001
(51) Int. Cl.: A01J 5/017

(54) **MILKING SYSTEM WITH THREE-DIMENSIONAL IMAGING**
MELKSYSTEM MIT DREIDIMENSIONALER BILDDARSTELLUNG
SYSTEME DE TRAITE POURVU D'UNE IMAGERIE EN TROIS DIMENSIONS

(30) Priority: 28.06.2000 NL 1015559
(43) Date of publication of application: 26.03.2003
(73) Proprietor: Idento Electronics B.V., 8316 PV Marknesse (NL)
(72) Inventor: CÖP, Jacobus, Petrus, Hendrikus, NL-8521 KS St. Nicolaasga (NL)
(74) Representative: Grootscholten, Johannes Antonius Maria
(86) International application number: PCT/NL2001/000471
(87) International publication number: WO 2002/000011

(56) References cited:
- WO-A-98/07311
- WO-A-98/19520
- WO-A-99/03064
- DE-A- 3 742 867

## Description

The present invention relates to a method and milking system for automatically milking livestock according to the preambles of claims 1 and 5 respectively.

Prior art methods and devices are known from e.g. WO-A-98/19.520. The known method and device have the drawback that they are slow. Obtaining a location to which the milking robot must be driven in order to arrange these teat cups on the teats takes much too long. The imaging techniques which are used allow too many errors, which is a drawback.

The invention has for its object to partly, and preferably wholly, obviate the above stated drawbacks of the known art, for which purpose a method and system are provided which are distinguished by the features in the characterising portions of claims 1 and 5 respectively.

Teats of the udder are easily identifiable by providing a three-dimensional udder pattern. By subsequently deducing control information for the robot arm from the three-dimensional udder pattern, a rapid and reliable solution is provided for localizing at least the position of the relevant teats and preferably also the orientation thereof so as to enable arrangement of teat cups with the robot arm.

In a preferred embodiment the method comprises of combining the images and herein placing the reference point in register in order to obtain the three-dimensional udder pattern herefrom. For this purpose the reference point can be made identifiable in the different images in diverse ways. A light source can thus be used to form a brightly illuminated dot on the relevant udder which can then be identified in both images of the udder. In this manner it is possible to place the reference points in register in the images.

In another preferred embodiment the method comprises of placing the camera at a distance and carrying an image for recording to the camera using a light conductor.
The object here is that the images are as independent as possible. When the images are obtained from positions at angles of view which enclose a spatial angle of 90, as much information as possible about the udder pattern is obtained with the images. The udder pattern is then for instance a relief map or contour map in which the teats are clearly identifiable. Such a relief image is preferably generated from independent images with an overlap of for instance 60-80%.

The camera is preferably disposed at a distance from the milking location. At the desired positions from which images of the udder must be obtained under the above stated conditions and preferred circumstances, it is then only necessary for instance to arrange lenses wherein light conductors extend between the lenses and the actual cameras. The cameras can be CCDs. Thus is ensured that a restless animal cannot damage the cameras, but only the simple lenses, which can be replaced at low cost if the restless animal steps against them.

The invention will be further elucidated hereinbelow on the basis of the drawing, in which:
fig. 1 and 3 show a perspective view of a milking system;
fig. 2 shows a perspective view of an alternative device; and
fig. 4 shows an embodiment of the invention.

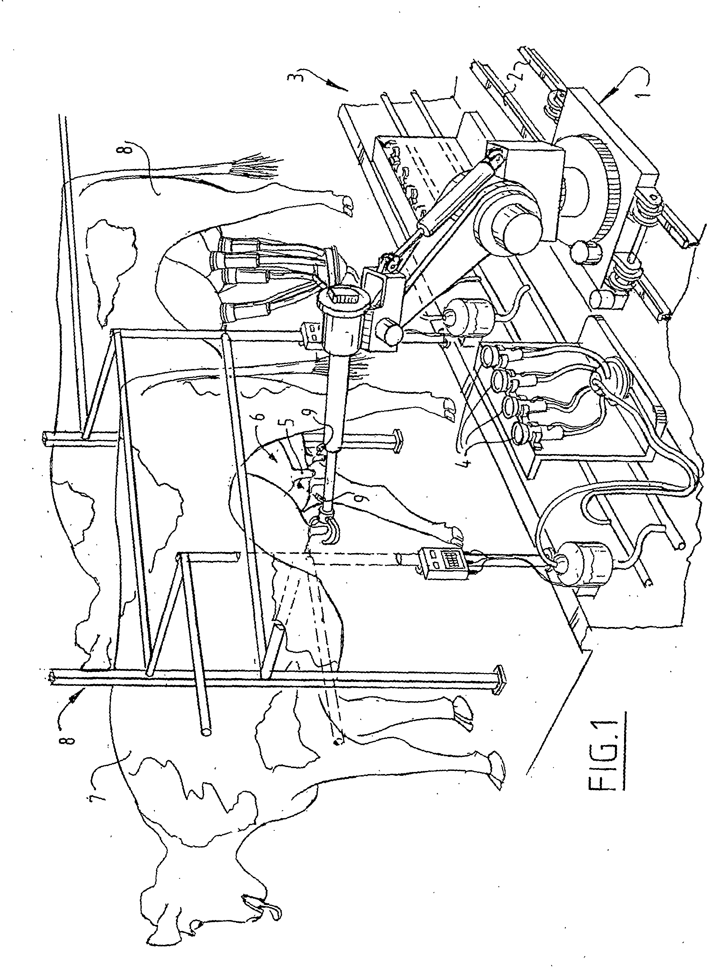

Figures 1-3 do not constitute embodiments of the invention.

Fig. 1 shows a part of a milking parlour in which an industrial robot 1 is disposed. Robot 1 is situated for travel on rails 2 in a milking pit 3, through which the farmer traditionally walked in order to arrange the teat cups, this now being done with industrial robot 1.

As already noted, robot 1 arranges teat cups 4 on teats 5 of udder 6 of a cow 7 standing in a milking box 8. Robot 1 can travel in order to arrange teat cups 4 in diverse milking boxes 8.

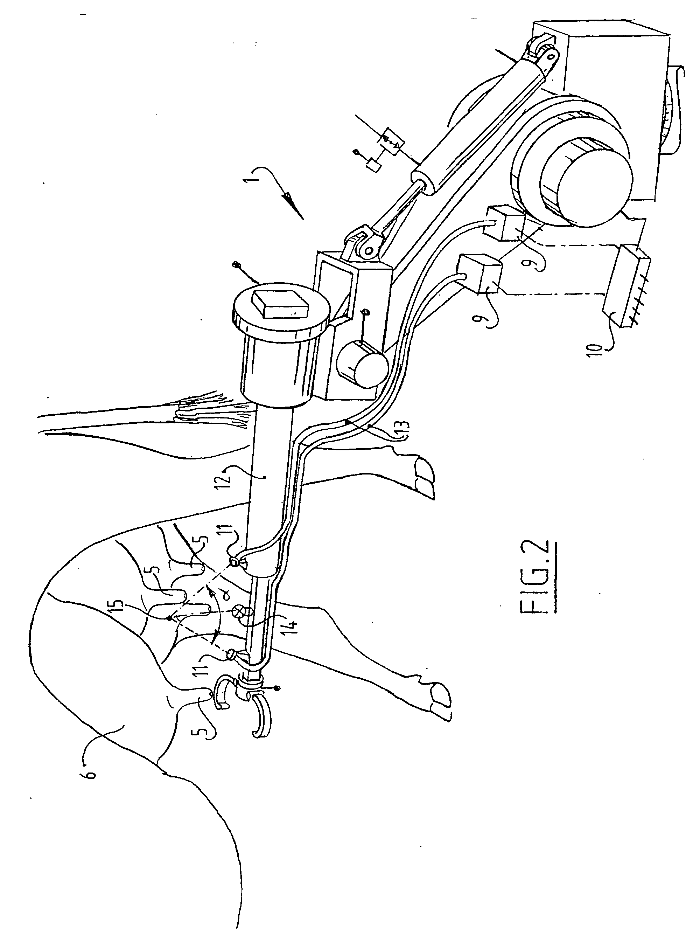

As described in more detail hereinbelow and in fig. 2-4, robot 1 is provided with at least one camera 9; in the case shown in fig. 1 two cameras are arranged. The cameras can for instance be of the CCD type, although other imaging devices are also possible, insofar the signals originating therefrom can be processed by a control 10 as shown schematically in fig. 2.

As shown in fig. 2, two images of the udder are obtained substantially simultaneously at angles of view enclosing a spatial angle α. In order to enable the collection of as much information as possible about the shape of the udder, the position of the teats, the orientation of the teats and so on, the obtained images must be as independent as possible. For this reason the spatial angle α enclosed between the directions of view amounts preferably to at least approximately 90°.

Further shown in fig. 2 is that only lenses 11 are arranged on arm 12 of the robot, and that cameras 9 are placed at a distance. Light conductors 13 are arranged between lenses 11 and the actual cameras 9. Damage to the relatively expensive cameras 9 by a restless animal for milking is effectively prevented with such a configuration. Light conductors 13 can for instance be glass fibre cables.

Fig. 2 further shows that a light source 14 is arranged on arm 12. Light source 14 illuminates a reference point 15 which is identifiable in both images of cameras 9. With this reference point 15 in both images of cameras 9 a three-dimensional udder pattern can be deduced using an image-processing program in control 10. The three-dimensional udder pattern is generated by the control in the form of for instance a relief map or contour map. It is noted in this respect that the arrangements shown in the figures are schematic, since it must be possible to map the whole udder with one set of images. The cameras 9 (or lenses 11) used are placed. at a distance from the presumed location of udder 6 such that such an imaging is possible. A stereoscopic image of udder 6, and more particularly the teats 5 thereof, is thus generated with the two cameras (or lenses).

As will be apparent from the foregoing, control 10 comprises an image-processing device for obtaining the three-dimensional udder pattern. Control 10 also provides the driving of robot 1 for the purpose of arranging teat cups 4 on the teats. For the purpose of a clear view in the drawing, the robot 1 does not carry a teat cup 4. It is on the other hand advantageous to have a teat cup at the ready at the time of the imaging. In this way little time need elapse between forming of the images and the arranging of teat cups 4 on teats 5, so that there remains only a limited chance of the cow moving, which will necessitate a new imaging.

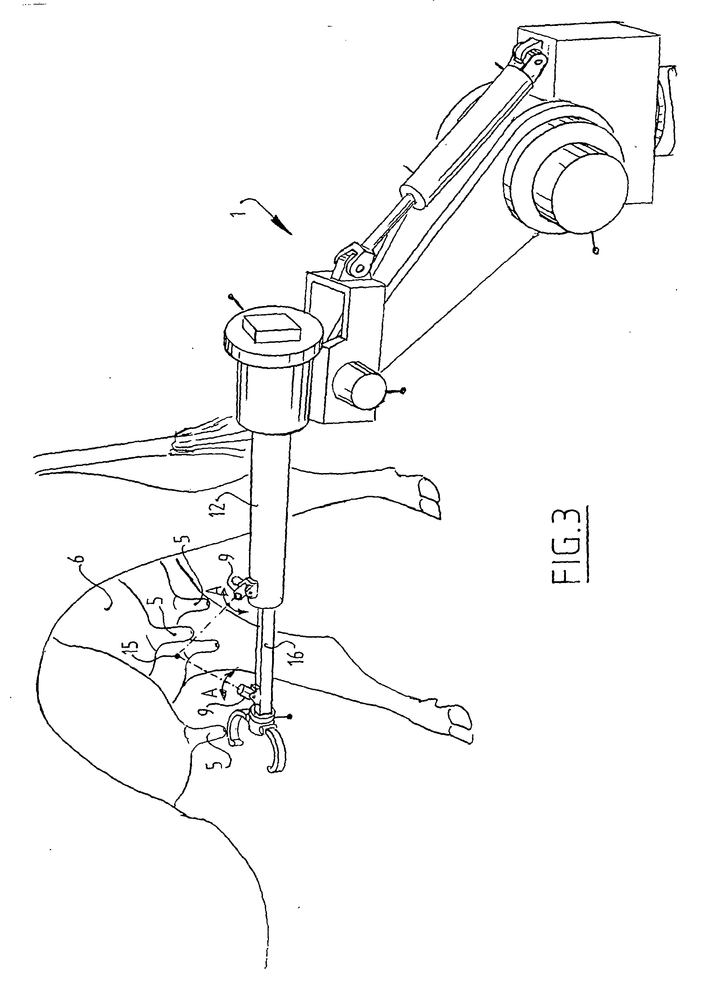

Fig. 3 shows the embodiment of fig. 1 in more detail, wherein cameras 9 are arranged directly on robot arm 12. Cameras 9 can herein be directed, this being indicated with double arrows A. An extendable part 16 of robot arm 12 is further provided, with which the distance between cameras 9 can be varied. In the embodiment shown here an optimally flexible configuration is obtained by variation of the distance between cameras 9 with part 16 and the adjustment of the associated angles of view along arrows A. Adjustment of cameras 9 and extension of part 16 of robot arm 12 are carried out by control 10 (not shown in fig. 3). A configuration similar to that of fig. 2 is of course possible, wherein cameras 9 are not placed on the robot arm, but at a distance.

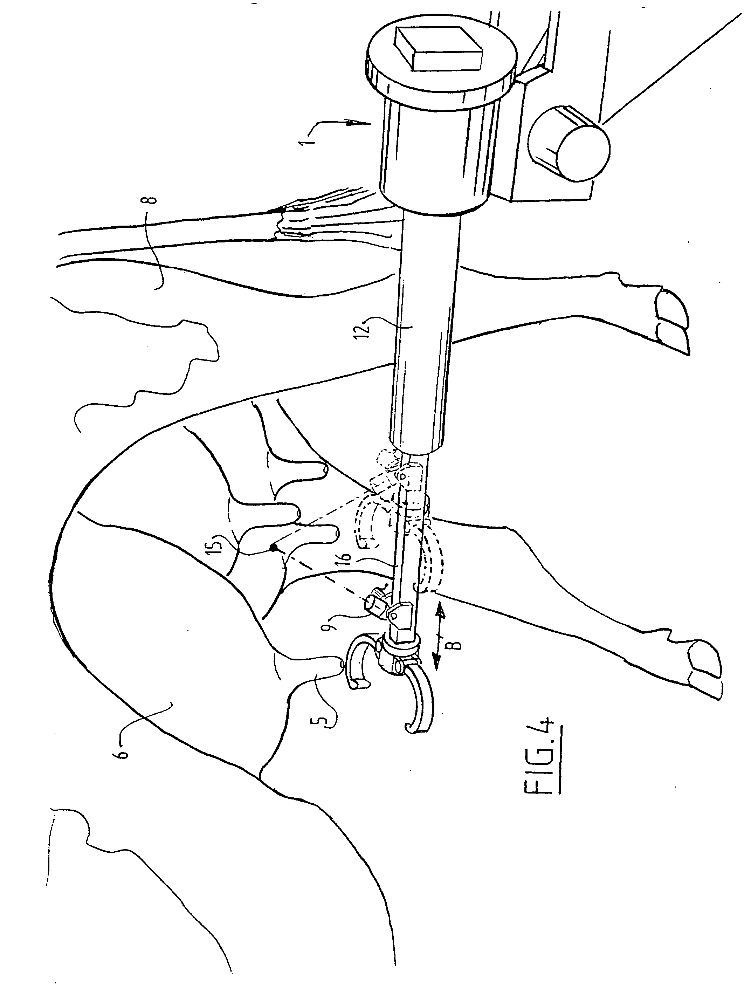

Fig. 4 shows an embodiment of the invention with a single camera 9 on the extendable part 16 of robot arm 12. The extendable part is displaceable in the direction of arrow B. The single camera is again adjustable, i.e. the angle of view thereof is adjustable. In a retracted position of the extendable part 16 of robot arm 12 the camera 9 is directed forward relative to robot arm 12, as shown here with dash-dot lines. Conversely, camera 9 is directed to the rear relative to robot arm 12 in the extended position of extendable part 16. Two successive images can thus be obtained in a very short time with a single camera 9, with only a very limited risk of the relevant animal moving in the meantime. The embodiment of fig. 4 is different from the foregoing drawings in that only a single camera 9 is provided, which must obtain two successive images. Although between obtaining of the images some time elapses during which an animal for milking could move, only a single camera 9 is required in this embodiment of fig. 4, which represents a saving relative to the foregoing embodiments.

The extendable part 16 of robot arm 12 thus forms displacing means for displacing the camera, as well as a carrier for placing the single camera.

In fig. 3 and 4 the reference point 15 is furthermore not an explicitly illuminated point, but another clearly identifiable element in both images. A discolouration of the skin, an abrupt bend in a blood vessel lying close to the surface of the skin, and so on can be envisaged here. In fig. 3 and 4 no separate light source is therefore provided for the reference point, although a separate light source (not shown) can still be provided to illuminate the whole udder.

Many alternative and additional embodiments are possible within the scope of the present invention as defined in the appended claims. More than two images can also be used, and more than one reference point can be used in the images to combine the images into the desired three-dimensional udder pattern so as to enable deducing therefrom of the position and optionally also the orientation of the different teats. In addition, cameras can be used other than the stated cameras of the CCD-type. If more than two cameras are used, it is still recommended to keep the directions of view as independent as possible.

In the foregoing an industrial robot is used by way of example in each case. Other milking robots of a more conventional type can also be used to apply the present invention. The invention can further be applied with animals other than cows, such as goats and sheep and so on. Displacing means other than an extendable part of the robot arm can also be used in fig. 3 and 4. Displacement of the camera over the robot arm can for instance be envisaged along for instance a guide rail or a similar configuration. It is thus apparent that many alternative and additional embodiments will occur to the skilled person after examination of the foregoing.

The embodiment of the invention explicitly described above and shown in fig. 4 is therefore not definitive, but the invention is limited solely to the definition according to the appended claims.

## Claims

1. Method for automatically milking livestock, comprising of determining at least the location of teats (5) on an udder (6) with imaging; arranging teat cups (4) on the teats at the determined location with a robot arm (1); and milking the livestock with a control (10) of the teat cups, wherein the imaging comprises of: obtaining at least two substantially independent images having therein at least one common reference element; sending the images to an image-processing device; obtaining a three-dimensional udder pattern from the images by means of image-processing on the basis of the reference element; and driving the robot arm to the teats on the basis of the udder pattern, wherein a single camera (9; 11) for obtaining said at least two images is mounted on the robot arm,
**characterised by**
activating the camera at least twice in succession, and displacing the robot arm between obtaining said at least two images.

2. Method as claimed in claim 1, comprising of combining the images and herein placing the reference point in register in order to obtain the three-dimensional udder pattern therefrom.

3. Method as claimed in claim 1 or 2, further comprising of displacing the camera over a known distance and, prior to recording of an image, redirecting the camera to the presumed location of the udder in order to obtain at least two images at an angle known beforehand.

4. Method as claimed in any of the foregoing claims 1-3, comprising of placing the camera at a distance and carrying an image for recording to the camera using a light conductor (13).

5. Milking system for implementing a method as claimed in one or more than one of the foregoing claims for automatically milking of livestock, comprising: at least two teat cups (4); a robot (1) arm for arranging the teat cups on teats (5) of an udder (6) of a livestock animal positioned at a milking location; and an imaging system which comprises: a single camera (9) for obtaining at least two substantially independent images having therein at least one common reference element; an image-processing device for obtaining a three-dimensional udder pattern from the images by means of image-processing on the basis of the reference element; and a control (10) for activating driving the robot arm to the teats on the basis of the three-dimensional udder pattern, wherein said camera for obtaining said at least two images is mounted on the robot arm, **characterized in that**
the camera is activated at least twice in succession and the control drives the robot arm for displacement of the camera between obtaining said at least two images.

6. Milking system as claimed in claim 5, comprising a camera, wherein the imaging system comprises a carrier for the camera, which carrier comprises displacing means (16) for displacing the camera in the period between recording successive images of the udder.

7. Milking system as claimed in claim 6, wherein the carrier or the camera comprises directing means with which the camera can be directed to a location known beforehand of the udder of a relevant animal.

8. Milking system as claimed in one or more than one of the foregoing claims 5-7, wherein the camera is disposed at a distance from the milking location.

9. Milking system as claimed in claim 8, wherein a light conductor (13) directed or to be directed at the location of the udder is arranged in the vicinity of a presumed location of the udder of an animal for milking, which light conductor extends to the camera at a distance from the milking location.

10. Milking system as claimed in claim 9, wherein an imaging element, such as a lens, is arranged on the end of the light conductor directed or to be directed toward the udder at the presumed location.

## Patentansprüche

1. Verfahren zum automatischen Melken von Vieh, aufweisend das Bestimmen von wenigstens der Stelle der Zitzen (5) eines Euters (6) mittels Bildverarbeitung; das Anordnen der Zitzentassen (4) auf den Zitzen an der vorbestimmten Stelle mittels eines Roboterarms (1) ; und das Melken des Viehs mit einer Steuerung (10) der Zitzentassen, wobei die Bildverarbeitung folgendes aufweist: das Erhalten von wenigstens zwei im wesentlichen unabhängigen Bildern, die wenigstens ein gemeinsames Referenzelement besitzen; das Senden der Bilder an eine Bildverarbeitungsvorrichtung; das Erhalten eines dreidimensionalen Eutermusters aus den Bildern mittels Bildverarbeitung auf der Basis des Referenzelementes; und das Steuern des Roboterarms zu den Zitzen auf der Basis des Eutermusters, wobei eine einzige Kamera (9; 11) zum Erhalten der wenigstens zwei Bilder auf dem Roboterarm befestigt ist, **gekennzeichnet durch** Aktivieren der Kamera wenigstens zweimal im einer Abfolge und Versetzen des Roboterarms zwischen dem Erhalt der wenigstens zwei Bilder.

2. Verfahren gemäß Anspruch 1, aufweisend das Kombinieren der Bilder und das darin Plazieren des Referenzpunktes in einem Register, um daß dreidimensionale Eutermuster daraus zu erhalten.

3. Verfahren gemäß Anspruch 1 oder 2, des weiteren aufweisend das Versetzen der Kamera über eine bekannte Distanz und, vor dem Aufzeichnen eines Bildes, das Wiederausrichten der Kamera auf die vermutete Stelle des Euters, um wenigstens zwei Bilder in einem bekannten Winkel im Voraus zu erhalten.

4. Verfahren gemäß einem der vorgenannten Ansprüche 1 bis 3, aufweisend das Plazieren der Kamera in einer Distanz und das Übertragen eines Bildes zur Aufzeichnung an die Kamera unter Verwendung eines Lichtleiters (13).

5. Melksystem zur Implementierung eines Verfahrens gemäß einem oder mehrerer der vorgenannten Ansprüche zum automatischen Melken von Vieh, aufweisend: wenigstens zwei Zitzentassen (4); einen Roboter (1) Arm zum Anordnen der Zitzentassen auf den zitzen (5) eines Euters (6) eines Melkviehs, das in einer Melkposition angeordnet ist; und ein Bildverarbeitungssystem, das aufweist: eine einzige Kamera (9) zum Erhalten von wenigstens zwei im wesentlichen unabhängigen Bildern, die wenigstens ein gemeinsames Referenzelement besitzen; eine Bildverarbeitungsvorrichtung zum Erhalten eines dreidimensionalen Eutermusters aus den Bildern mittels Bildverarbeitung auf der Basis des Referenzelementes; und eine Steuerung (10) zum Steuern des Roboterarms zu den Zitzen auf dem dreidimensionalen Eutermuster, wobei die Kamera zum Erhalten der wenigstens zwei Bilder auf dem Roboterarm befestigt ist, **dadurch gekennzeichnet, dass** die Kamera wenigstens zweimal in einer Abfolge aktiviert wird und die Steuerung den Roboterarm zum Versetzen der Kamera zwischen dem Erhalt der wenigstens zwei Bilder steuert.

6. Melksystem gemäß Anspruch 5, aufweisend eine Kamera, wobei das bildverarbeitende System einen Träger für die Kamera aufweist, wobei der Träger eine Versatzvorrichtung (16) zum Versetzen der Kamera in der periode zwischen den nacheinanderfolgenden Bildaufzeichnungen des Euters aufweist.

7. Melksystem gemäß Anspruch 6, wobei der Träger oder die Kamera eine Ausrichtungsvorrichtung aufweist, mit der die Kamera zu einer im Voraus bekannten Stelle des Euters eines betrottenen Tieres ausgerichtet werden kann.

8. Melksystem gemäß einem oder mehrerer der vorgenannten Ansprüche 5 bis 7, wobei die Kamera in einer Distanz von der Melkstelle entfernt angeordnet ist.

9. Melksystem gemäß Anspruch 8, wobei ein Lichtleiter (13), der auf die Stelle des Euters gerichtet ist oder gerichtet werden soll, in der Nähe einer angenommenen Stelle des Euters eines zu melkenden Tieres angeordnet ist, wobei sich der Lichtleiter in einer Distanz von der Melkstelle zu der Kamera erstreckt.

10. Melksystem gemäß Anspruch 9, wobei ein Bildelement wie eine Linse am Ende des Lichtleiters, der auf das Euter an der angenommenen Stelle gerichtet ist oder gerichtet werden soll, angeordnet ist.

## Revendications

1. Méthode de traite automatique du bétail, comprenant la détermination d'au moins l'emplacement de trayons (5) sur une mamelle (6) avec présentation en image ; la disposition de gobelets trayeurs (4) sur les trayons à un emplacement déterminé à l'aide d'un bras robotisé (1) ; et la traite du bétail avec une commande (10) des gobelets trayeurs, dans laquelle la présentation en image consiste en : obtenir au moins deux images indépendantes pour l'essentiel disposant à l'intérieur d'au moins un élément de référence commun ; envoyer les images à un dispositif de traitement d'image ; obtenir un modèle de mamelle en trois dimensions à partir des images au moyen du traitement d'image sur la base de l'élément de référence ; et piloter le bras robotisé jusqu'aux trayons sur la base du modèle de mamelle, dans laquelle un appareil caméra unique (9 ; 11) destiné à obtenir lesdites images au nombre minimum de deux est monté sur le bras robotisé,
**caractérisée par**
l'activation de l'appareil caméra au moins deux fois de suite, et le déplacement du bras robotisé entre l'obtention desdites images au nombre minimum de deux.

2. Méthode selon la revendication 1, consistant à combiner les images et, en cela, placer le point de référence en registre afin d'obtenir à partir de là le modèle de mamelle en trois dimensions.

3. Méthode selon la revendication 1 ou 2, consistant en outre à déplacer l'appareil caméra sur une distance connue et, avant l'enregistrement d'une image, rediriger l'appareil caméra jusqu'à l'emplacement supposé de la mamelle afin d'obtenir au moins deux images sous un angle connu au préalable.

4. Méthode selon l'une quelconque des revendications précédentes 1 à 3, consistant à placer l'appareil caméra à une certaine distance et à acheminer une image pour enregistrement jusqu'à l'appareil caméra à l'aide d'un conducteur de lumière (13).

5. Système de traite pour mettre en oeuvre une méthode selon l'une ou plusieurs des revendications précédentes pour la traite automatique du bétail, comprenant : au moins deux gobelets trayeurs (4) ; un bras robotisé (1) destiné à disposer les gobelets trayeurs sur des trayons (5) d'une mamelle (6) d'un animal du cheptel placé à un emplacement de traite ; et un système de présentation en image qui comprend : un appareil caméra unique (9) destiné à obtenir au moins deux images indépendantes pour l'essentiel disposant à l'intérieur d'au moins un élément de référence commun ; un dispositif de traitement d'image destiné à obtenir un modèle de mamelle en trois dimensions à partir des images au moyen du traitement d'image sur la base de l'élément de référence ; et une commande (10) destinée à activer le pilotage du bras robotisé jusqu'aux trayons sur la base du modèle de mamelle en trois dimensions, dans lequel ledit appareil caméra destiné à obtenir lesdites images au nombre minimum de deux est monté sur le bras robotisé,
**caractérisé en ce que**
l'appareil caméra est activé au moins deux fois de suite et la commande pilote le bras robotisé destiné à déplacer l'appareil caméra entre l'obtention desdites images au nombre minimum de deux.

6. Système de traite selon la revendication 5, comprenant un appareil caméra, dans lequel le système de présentation en image comprend un support pour l'appareil caméra, ledit support comprenant un moyen de déplacement (16) destiné à déplacer l'appareil caméra dans la période séparant l'enregistrement d'images consécutives de la mamelle.

7. Système de traite selon la revendication 6, dans lequel le support ou l'appareil caméra comprend un moyen de direction avec lequel l'appareil caméra peut être dirigé vers un emplacement connu au préalable de la mamelle d'un animal approprié.

8. Système de traite selon l'une ou plusieurs des revendications précédentes 5 à 7, dans lequel l'appareil caméra est disposé à une certaine distance de l'emplacement de traite.

9. Système de traite selon la revendication 8, dans lequel un conducteur de lumière (13) dirigé ou à diriger à l'emplacement de la mamelle est disposé à proximité d'un emplacement supposé de la mamelle d'un animal pour la traite, ledit conducteur de lumière s'étendant jusqu'à l'appareil caméra à une certaine distance de l'emplacement de traite.

10. Système de traite selon la revendication 9, dans lequel un élément de présentation en image, tel qu'un objectif, est disposé à l'extrémité du conducteur de lumière dirigé ou à diriger dans la direction de la mamelle à un emplacement supposé.
